# EUROPÄISCHE PATENTANMELDUNG

(11) **EP 3 572 627 A1**
(43) Veröffentlichungstag der Anmeldung: **27.11.2019**
(21) Anmeldenummer: 19176240.0
(22) Anmeldetag: 23.05.2019
(51) Int. Cl.: F01D 11/12, F02C 7/045, F04D 29/52, F04D 29/66

(54) **DICHTUNGSTRÄGER UND STRÖMUNGSMASCHINE**

(30) Priorität: 23.05.2018 DE 102018208040
(71) Anmelder: MTU Aero Engines AG, 80995 München (DE)
(72) Erfinder: Bamberg, Joachim, 85221 Dachau (DE); Neuhäusler, Stefan, 86672 Thierhaupten (DE); Henkel, Benjamin, 80997 München (DE); Broszat, Dominik, 85774 Unterföhring (DE)

(57) **Zusammenfassung**

Die vorliegende Erfindung betrift einen Dichtungsträger (2) für eine Strömungsmaschine zum Abdichten eines Radialspalts (14) zwischen einem Statorabschnitt (12) und einem Rotorabschnitt (16), mit einem Grundkörper (4), der an einer Seite (6) mit einem Einlaufbelag (8) versehen ist, wobei der Grundkörper (4) zumindest einen Hohlraum (20, 22, 24) hat, der über zumindest eine Öffnung (26) zum Einlaufbelag (8) geöffnet ist, sodass ein Helmholz-Resonator geschaffen wird. Dabei schafft der Bereich des Einlaufbelags (8), der mit der zumindest einen Öffnung (26) versehen ist, die schwingende Masse des Helmholtz-Resonators und der zumindest eine Hohlraum (20, 22, 24) das Federvolumen des Helmholtz-Resonators. Durch diese Anordnung kann bei gleichbleibenden Dichtungseigenschaften eine substantielle Geräuschreduktion erreicht werden. Bevorzugterweise handelt es sich bei dem Einlaufbelag (8) um eine Zellstruktur. Die Hohlräume (20, 22, 24) können dabei auch mit einem geräuschdämpfenden Füllstoff versehen werden.

## Beschreibung

Die vorliegende Erfindung betrifft einen Dichtungsträger für eine Strömungsmaschine, beispielsweise ein Flugtriebwerk, sowie eine Strömungsmaschine.

Bei Strömungsmaschinen wie Gasturbinen und Dampfturbinen werden regelmäßig Spalte zwischen rotierenden und statischen Maschinenteilen abgedichtet, um Sekundärstromverluste zu vermeiden. Dies gilt beispielsweise für die Abdichtung von Radialspalten zwischen radial inneren Enden von Leitschaufeln und einem gegenüberliegenden Rotorabschnitt (Inner Air Seal) oder zwischen radial äußeren Enden von Laufschaufeln und einem gegenüberliegenden Statorabschnitt (Outer Air Seal). Beim Betrieb der Strömungsmaschine und auch durch Flugmanöver stehen die Rotorabschnitte bzw. die Starterabschnitte gewöhnlich in Reibkontakt mit gegenüberliegenden Einlauf- bzw. Anstreifbelägen, was unter anderem eine Spaltschließung bewirkt. Durch aerodynamische Interaktion der Rotor- und Statorblätter werden Druckschwankungen in der Strömungsmaschine erzeugt, die als Geräusche auch in der Umgebung wahrgenommen werden.

Aufgabe der Erfindung ist es, einen Dichtungsträger für eine Strömungsmaschine wie ein Flugtriebwerk zu schaffen, der die vorgenannten Nachteile beseitigt und eine Geräuschreduktion im Betrieb ermöglicht. Zudem ist es Aufgabe der Erfindung, eine Strömungsmaschine zu schaffen, die bei gleicher Auslegung eine geringere Geräuschentwicklung als herkömmliche Strömungsmaschinen aufweist.

Diese Aufgabe wird gelöst durch einen Dichtungsträger mit den Merkmalen des Patentanspruchs 1 und durch eine Strömungsmaschine mit den Merkmalen des Patentanspruchs 10.

Ein erfindungsgemäßer Dichtungsträger für eine Strömungsmaschine, beispielsweise ein Flugtriebwerk oder eine stationäre Gasturbine, zum Abdichten eines Spaltes zwischen einem Statorabschnitt und einem Rotorabschnitt hat einen Grundkörper, der an einer Seite mit einem Einlaufbelag versehen ist. Erfindungsgemäß hat der Grundkörper zumindest einen Hohlraum, der über zumindest eine Öffnung an der den Einlaufbelag aufnehmenden Seite geöffnet ist.

Durch den Hohlkörper in Kombination mit dem Einlaufbelag ist erfindungsgemäß ein Helmholtz-Resonator in den Dichtungsträger integriert. Durch den Helmholtz-Resonator wird Schallenergie aus der Umgebung in Wärmeenergie umgewandelt, was eine Schalldämpfung und somit eine Geräuschreduzierung beim Anschleifen bewirkt. Ein Helmholtz-Resonator besteht im Wesentlichen aus einem Volumen, das über einen Hals mit der Außenumgebung kommuniziert. Bei dem erfindungsgemäßen Dichtungsträger wird das Volumen von dem Hohlraum bereitgestellt und der Hals von dem Einlaufbelag. Besonders gute Dämpfungsergebnisse sind bei niederfrequentem Schall erreichbar. Als niederfrequent werden vor allem für das menschliche Ohr wahrnehmbare Schallfrequenzen angesehen, insbesondere Frequenzen im einstelligen und niedrigen zweistelligen Kilohertzbereich angesehen, insbesondere handelt es sich um Frequenzen von 40Hz bis 10kHz. Ob der Schall niederfrequent ist, richtet sich beim Helmholtz-Resonator insbesondere danach, ob die Länge des Volumens und die Halslänge sowie der Halsdurchmesser bzw. die Halsquerschnittsfläche klein gegenüber der Wellenlänge sind. Bevorzugter Weise wird der Dichtungsträger so ausgelegt, dass bei einer Temperatur von ca. 1000°C Frequenzen im häufig auftretenden Bereich von 1 kHz bis 6 kHz absorbiert werden. Die Herstellung des Dichtungsträgers erfolgt bevorzugter Weise additiv. Hierdurch kann der dem Dichtungsträger erfindungsgemäß innewohnende Helmholtz-Resonator optimal auf seine Absorptionsfähigkeit eingestellt werden.

Bei einem Ausführungsbeispiel ist eine Vielzahl von Hohlräumen vorgesehen. Durch die Änderung der Anzahl und/oder des Volumens der Hohlräume kann gezielt auf die Absorptionsfähigkeit des Dichtungsträgers Einfluss genommen werden. Beispielsweise kann zur Einstellung der Absorptionsfähigkeit und insbesondere zur Einstellung der hierfür maßgeblichen Eigenfrequenz der zumindest eine Hohlraum über einen oder mehrere Zusatzräume rückwärtig vergrößert bzw. verlängert sein.

An der den Einlaufbelag aufnehmenden Seite können eine Vielzahl von Öffnungen ausgebildet sein. Hierdurch kann ebenfalls eine Abstimmung auf die zu dämpfenden Frequenzen erfolgen.

Bei einem Ausführungsbeispiel weist der Einlaufbelag eine Zellenstruktur aus einer Vielzahl von von Waben auf. Dabei sind zumindest vorzugsweise einigen Waben einzelne Öffnungen zugeordnet. Diese Waben können als Hälse des Helmholtz-Resonators wirken, wobei über ihre Form und Abmessungen die Absorptionsfähigkeit gezielt beeinflusst werden kann. Ferner kann aufgrund der Wabenstruktur zugleich ein Lambda-Viertel-Absorber bereitgestellt sein, der zusätzlich zu dem Helmholtz Resonator wirkt. Ein Lambda-Viertel-Absorber ist ein zu einer Seite offener Hohlraum der Wabenstruktur, der eine größte Ausdehnung in einer Tiefenrichtung, also in Radialrichtung der Strömungsmaschine, der Wabenstruktur aufweist, und der über diese Ausdehnung in der Tiefenrichtung zumindest eine teilweise Auslöschung der eintretenden Schallwellen erzielen kann. Der Absorptionseffekt des Lambda-Viertel-Absorbers und der Absorptionseffekt des Helmholtzresonators lassen sich vorteilhaft kombinieren.

Alternativ oder ergänzend kann der Einlaufbelag eine Zellenstruktur aufweisen und sich eine Öffnung über mehrere Zellen, beispielsweise Waben, erstrecken. Hierdurch können Öffnungen geschaffen werden, deren Öffnungsfläche größer als eine Zellengrundfläche ist.

Bei einem weiteren Ausführungsbeispiel ist die den Einlaufbelag aufnehmende Seite als ein Gitter ausgeführt, wobei sich der Einlaufbelag entlang von Gitterstreben erstreckt. Durch diese Maßnahme können eine Vielzahl von Öffnungen geschaffen werden.

Aus schallreduzierender Sicht ist es günstig, wenn die den Einlaufbelag aufnehmende Seite eine Gesamtfläche aufweist, deren öffnungsfreie Flächenabschnitte in Summe größer sind als eine Lochfläche, die von der Summe von Öffnungsflächen der Öffnungen gebildet ist.

Besonders günstig ist es, wenn die Lochfläche einen Anteil von ≤ 30% an der Gesamtfläche, noch bevorzugter einen Anteil von ≤ 20% an der Gesamtfläche, aufweist.

Zur weiteren schallreduzierenden Maßnahme kann es vorteilhaft sein, wenn in die zumindest eine Öffnung und/oder den zumindest einen Hohlraum ein Dämpfungsmittel eingebracht ist. Ein beispielhaftes Dämpfungsmittel ist ein temperaturbeständiges Vlies oder ein offenporiger Schaum, insbesondere ein offenporiger Metallschaum.

Eine erfindungsgemäße Strömungsmaschine wie ein Flugtriebwerk weist eine Dichtungsträgeranordnung zum Abdichten eines Spaltes zwischen einem Statorabschnitt und einem Rotorabschnitt auf, die eine Vielzahl von erfindungsgemäßen Dichtungsträgern aufweist. Durch diese Maßnahme werden tonale Anteile der Schaufelwechselfrequenzen im "Outer Air Sealbereich" oder im "Inner Air Sealbereich" reduziert. Die erfindungsgemäße Strömungsmaschine zeichnet sich somit im Vergleich zu einer herkömmlichen Strömungsmaschine bei gleicher Auslegung durch einen geräuschreduzierten Betrieb aus.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine perspektivische Darstellung eines Ausführungsbeispiels eines erfindungsgemäßen Dichtungsträgers,
- Figur 2: eine Axialsicht auf ein Ausführungsbeispiel einer erfindungsgemäßen Dichtungsträgeranordnung im montierten Zustand in einer Strömungsmaschine,
- Figur 3: eine Detaildarstellung eines Hohlraums des Dichtungsträgers aus Figur 1,
- Figur 4: eine Detaildarstellung eines Hohlraums eines zweiten Ausführungsbeispiels des erfindungsgemäßen Dichtungsträgers,
- Figur 5: eine Draufsicht auf den Einlaufbelag des Dichtungsträgers aus Figur 1 mit einer ersten beispielhaften Anordnung von Öffnungen, und
- Figur 6: eine Draufsicht auf den Einlaufbelag des ersten Ausführungsbeispiels aus Figur 1 mit einer zweiten beispielhaften Anordnung von Öffnungen.

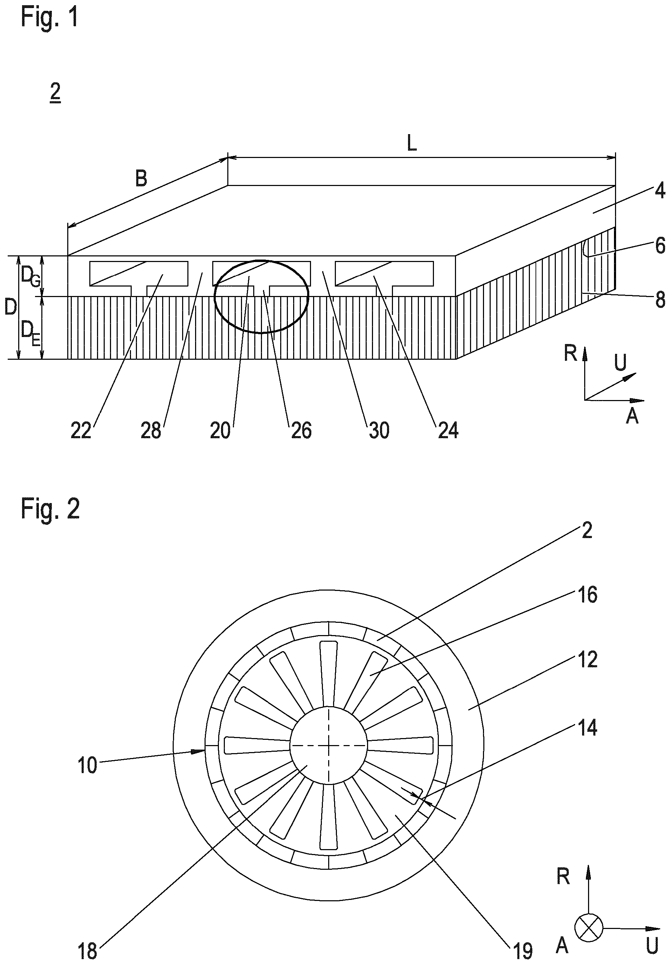

Figur 1 zeigt eine perspektivische Darstellung eines erfindungsgemäßen Dichtungsträgers 2 für eine Strömungsmaschine. Die Strömungsmaschine ist beispielsweise ein Flugtriebwerk, eine stationäre Gasturbine, eine Industrieturbine, eine Schiffsantriebsturbine oder eine Dampfturbine.

Der Dichtungsträger 2 hat einen Grundkörper 4, an dessen einer Seite 6 ein Einlaufbelag 8 vollflächig angeordnet ist. Der Dichtungsträger 2 ist bevorzugterweise additiv gefertigt, beispielsweise mittels selektiven Laserschmelzens. Der Grundkörper 4 und der Einlaufbelag 8 sind somit in einem Verfahren hergestellt und integral miteinander verbunden. Eine herkömmlicherweise getrennte Herstellung des Grundkörpers 4 und des Einlaufbelags 8 sowie dessen nachträgliche Anbindung an den Grundkörper4 bspw. mittels Lötens entfällt durch die additive Herstellung.

Wie in Figur 2 angedeutet, bildet der Dichtungsträger 2 in Kombination mit gleichartigen Dichtungsträgern 2 eine zum Ring gefügte Dichtungsträgeranordnung 10. Die Dichtungsträgeranordnung 10 ist hier als sogenanntes "Outer Air Seal" ausgeführt. Selbstverständlich kann sie auch als sogenanntes "Inner Air Seal" ausgeführt werden. Die Dichtungsträgeranordnung 10 kann verdichterseitig oder turbinenseitig angeordnet sein. In der hier gezeigten Ausführung als "Outer Air Seal" ist sie vorzugsweise turbinenseitig angeordnet, insbesondere im hinteren Turbinenbereich bzw. in der Niederdruckturbine.

Die Dichtungsträgeranordnung 10 ist in einem Statorabschnitt 12 angeordnet und dichtet jeweils einen Radialspalt 14 zu einem gegenüberliegenden Rotorabschnitt 16 ab. Die Rotorabschnitte 16 sind Laufschaufeln, die an einer um eine Maschinenlängsache rotierenden Rotorwelle 18 angeordnet sind. Die Dichtungsträger 2 sind dabei derart ausgerichtet, dass sie mit ihrem Einlaufbelägen 8 in Richtung des Rotorabschnittes 16 zeigen und somit einen vom Heißgasstrom durchströmten Ringraum 19 radial außen begrenzen. Im Betrieb der Strömungsmaschine laufen die Rotorabschnitte 16 spitzenseitig in die Einlaufbeläge 8 ein oder schleifen an diesen an, so dass der jeweilige Radialspalt 14 geschlossen und die Bildung von Sekundärströmungen verhindert wird.

Mit Verweis auf Figur 1 wird definiert, dass die Dicke D eines der Dichtungsträger 2 in Radialrichtung R, die Länge L des Dichtungsträgers 2 in Axialrichtung A und die Breite B des Dichtungsträgers 2 in Umfangsrichtung U der Strömungsmaschine abgetragen wird. Die Dicke D des Dichtungsträgers 2 setzt sich aus der Dicke D_{G} des Grundkörpers 4 und der Dicke D_{E} des Einlaufbelags 8 zusammen. Generell bezieht sich die Axialrichtung A, die Radialrichtung R und die Umfangsrichtung U auf die Maschinenlängsachse und somit auf die der Maschinenlängsachse entsprechenden Drehachse der Rotorwelle 16. Ergänzend wird erwähnt, dass die Verwendung der Angaben "Radialrichtung", "Axialrichtung" und "Umfangsrichtung" ebenfalls die Angaben "im Wesentlichen in Radialrichtung", "im Wesentlichen in Axialrichtung" und "im Wesentlichen in Umfangsrichtung" umfassen.

Ein beispielhafter Dichtungsträger 2 hat eine Länge L von 10cm, eine Breite B von 10cm und eine Dicke D_{G} von 1 cm.

Der Grundkörper 4 weist einen mittleren Hohlraum 20, einen dem mittleren Hohlraum 20 in Strömungsrichtung betrachtet vorgelagerten vorderen Hohlraum 22 und einen in Strömungsrichtung betrachtet nachgelagerten hinteren Hohlraum 24 auf. Die Hohlräume 20, 22,24 sind umfangseitig geschlossen und lediglich über zumindest jeweils eine Öffnung 26 in der den Einlaufbelag 8 aufnehmenden Seite 6 zum Ringraum 19 geöffnet. Die Hohlräume 20, 22, 24 sind also zum Einlaufbelag 8 geöffnet. Bevorzugterweise haben die Hohlräume 20, 22, 24 ihre größte Erstreckung in Richtung der Breite B des Grundkörpers 4 (Umfangsrichtung U) und sind seitlich geschlossen. Grundsätzlich ist es jedoch auch vorstellbar, die Hohlräume 20, 22, 24 seitlich zu öffnen, so dass ein einzelner Dichtungsträger 2 nicht eigene Hohlräume 20, 22, 24 aufweist, sondern sich die Hohlräume 20, 22, 24 in Umfangsrichtung U betrachtet über benachbarte Dichtungsträger 2 erstrecken, so dass die Hohlräume 20, 22, 24 mehreren Dichtungsträgern gleichzeitig zugeordnet sind bzw. ein einzelner Dichtungsträger 2 lediglich einen Hohlraumabschnitt bildet.

In dem hier gezeigten Ausführungsbeispiel sind die drei Hohlräume 20, 22,24 über jeweils eine sich in Umfangsrichtung U erstreckende Trennwand 28, 30 fluidtechnisch voneinander getrennt. Allerdings ist es auch vorstellbar, die drei Hohlräume 20, 22,24 fluidtechnisch miteinander zu verbinden, so dass lediglich ein Hohlraum 20, 2, 24 in dem Dichtungsträger 2 bzw. in dessen Grundkörper 4 gebildet ist. Erfindungsgemäß dienen die Hohlräume 20, 22, 24 in Kombination mit der zumindest einen Öffnung 26 als Helmholtz-Resonatoren und bewirken eine Geräuschreduzierung vorzugsweise unter Reiseflugbedingungen oder beim Starten und Landen.

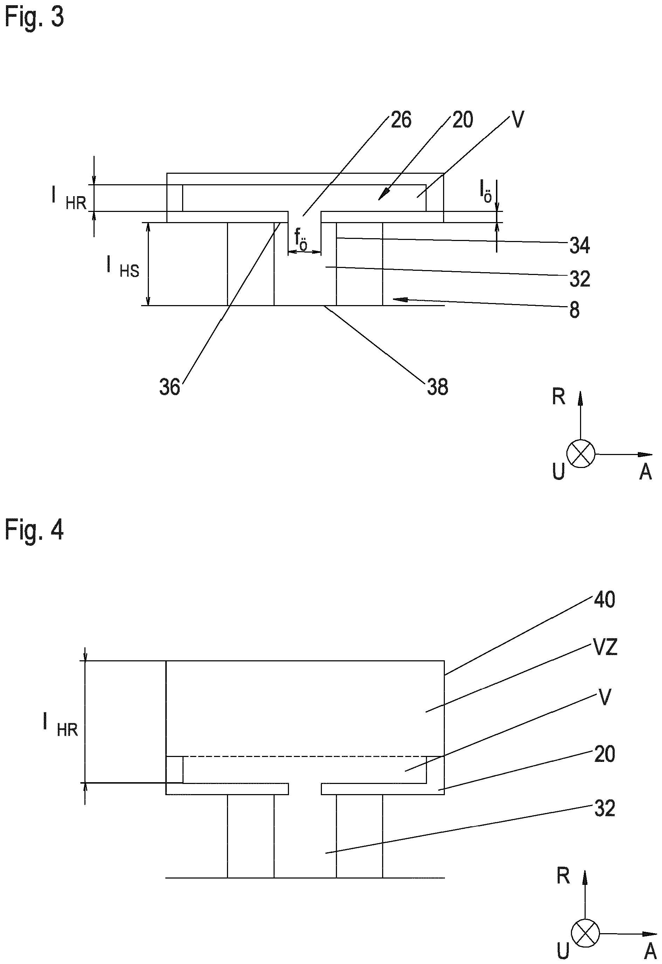

Wie am mittleren Hohlraum 20 stellvertretend auch für den vorderen und hinteren Hohlräume 22, 24 in Figur 3 illustriert, hat der Hohlraum 20 ein Volumen V mit einer in Radialrichtung R abgetragen Länge l_{HR}. Der Hohlraum 20 ist hier beispielhaft rechteckig ausgebildet mit seiner größten Erstreckung in Umfangsrichtung U und seiner kleinsten Erstreckung in Radialrichtung R.

Der Einlaufbelag 8 ist hier als eine Zellenstruktur, insbesondere als eine Wabenstruktur ausgebildet, die eine Vielzahl von einzelnen bevorzugterweise gleich großen Zellen, hier Waben 32, aufweist. Jede Wabe 32 wird von einer Wabenwand 34 begrenzt, die sich von einer Wabengrundfläche 36 auf dem Grundkörper 4 orthogonal über eine Länge l_{HS} bis zu einem Mündungsbereich 38 der jeweiligen Wabe 32 erstreckt. Die Wabe 32 ist somit zum Ringraum 19 (Figur 2) geöffnet. Die Öffnung 26 durchsetzt die Wabengrundfläche 36 und bewirkt somit eine Fluidverbindung zwischen dem Hohlraum 20 und der Wabe 32. Die Wabengrundfläche 36 kann jede Form annehmen, sie ist nicht auf die in den Figuren gezeigte viereckige bzw. quadratische Form beschränkt, sondern kann beispielsweise auch rechteckig oder kreisförmig sein.

Die Wabe 32, in deren Wabengrundfläche 36 eine Öffnung 26 zum Hohlraum 20 eingebracht ist, wirkt mit ihrer Wabenwand 34 als Hals des Helmholtz-Resonators und der Hohlraum 20 als das Volumen V des Helmholtz-Resonators. Ein Helmholtz-Resonator weist gewöhnlich einen Hohlraum mit einem Hals auf, über den das Hohlraumvolumen mit der Außenumgebung kommunizieren kann. Durch die geschickte Wahl der Größe des Volumen des Hohlraums und die Länge sowie der Öffnungsquerschnitt des Halses lassen sich besonders vorteilhafte Geräuschreduzierungen erzielen. Die Luft in dem Hals bildet eine träge Masse, die mit der Luft in dem Hohlraum ein Feder-Masse-System bildet, wobei die Luft in dem Hohlraum die Feder bildet. Die maximale Absorption tritt im Bereich der Eigenfrequenz des Helmholz-Resonators auf. Insbesondere bei niederfrequentem Schall weist ein Helmholtz-Resonator eine hohe Absorptionsfähigkeit auf. Niederfrequent ist der Schall im Prinzip dann, wenn die Länge des Hohlraums, die Länge des Halses und die Öffnungsfläche bzw. der Öffnungsquerschnitt des Halses klein sind im Vergleich zur Wellenlänge.

Übertragen auf den erfindungsgemäßen Dichtungsträger 2 bedeutet dies stark vereinfacht, dass der Hohlraum 20 das "Federvolumen" V bereitstellt und die Wabe 32 den Resonatorhals und somit die träge Masse. Ein Einfluss der Öffnungsfläche fö der Öffnung 26 und der Länge lö der Öffnung 26 wird zur grundsätzlichen Übertragung des Wirkprinzips nicht näher betrachtet. Beispielsweise Frequenzen in dem hier gezeigten Ausführungsbeispiel befinden sich im Bereich von 1 kHz bis 6 kHz. Eine beispielhafte Dichtungsträgertemperatur in der Niederturbine beläuft sich auf 1000°C. Zur Einstellung der Absorptionsfrequenzen kann, wie in Figur 4 angedeutet, beispielsweise die Länge l_{HR} des Hohlraums 20 über einen rückwärtigen Zusatzraum 40 vergrößert werden. Alternativ kann die Länge l_{HR} des Hohlraums 20 auch verkürzt werden.

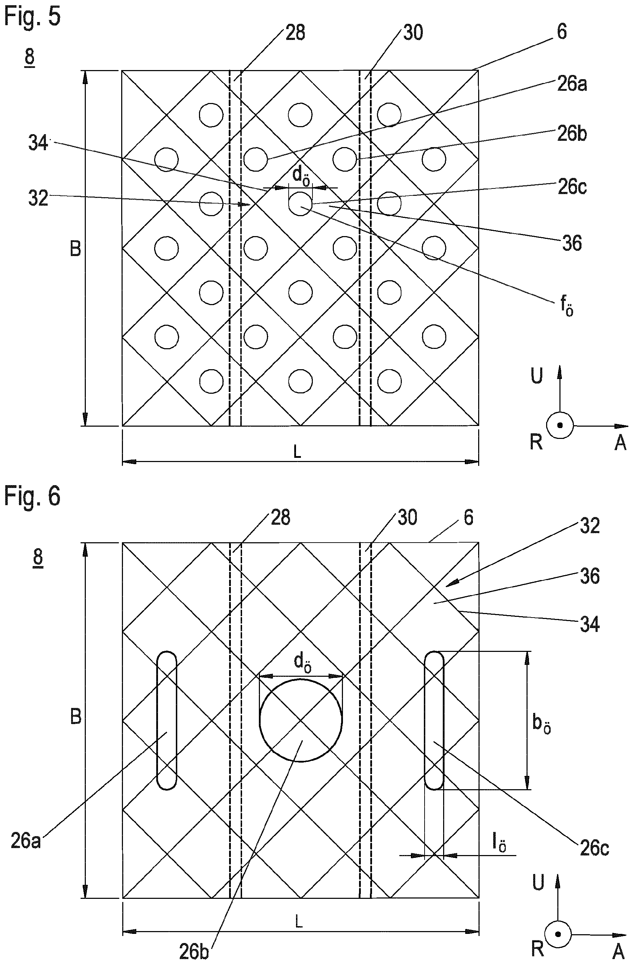

In Figur 5 ist ein Ausführungsbeispiel einer möglichen Ausbildung von Öffnungen 26a, b, c gezeigt. Die Darstellung der Öffnungen 26a, b, c dient lediglich zum Aufzeigen eines beispielhaft möglichen, aber nicht beschränkenden Lochmusters.

In dem hier gezeigten Ausführungsbeispiel ist jeder vollständigen Wabe 32a, b, c eine einzelne Öffnung 26a, b, c zugeordnet. Die Öffnungen 26a, b, c sind jeweils mittig in den Wabengrundflächen 36 angeordnet und haben einen konstanten Durchmesser dö und somit eine kreisförmige Öffnungsfläche fö. Die Summe der Öffnungsflächen 26a, 26b, 26c über die Seite 6 ergibt eine Lochfläche.

Im Wesentlichen hat die den Einlaufbelag 8 aufnehmende Seite 6 eine Gesamtfläche, die von der Breite B und Länge L des Grundkörpers 4 bestimmt ist und von der Summe der Wabengrundflächen 36 gebildet ist. Im Wesentlichen gilt, dass die Lochfläche kleiner ist als die öffnungsfreien Gesamtflächenabschnitte. Bevorzugterweise hat die Lochfläche einen Anteil von ≤ 30% an der Gesamtfläche, noch bevorzugter von ≤ 20%.

Zudem sei erwähnt, dass die Waben 32 auch trichterförmig in die Öffnungen 26a, b, c übergehen können, dass also die Wabengrundfläche 36 von der jeweiligen Öffnungsfläche fö gebildet wird. Wenn die Öffnungen 26a, b, c eine entsprechend große Öffnungsfläche fö aufweisen oder wenn die Waben 32 eine entsprechend kleine Wabengrundfläche 36 aufweisen, können die Waben 32 auch senkrecht zur Seite 6 in die Öffnungen 26a, b, c übergehen, vorausgesetzt die Öffnungsflächen fö und die Wabengrundflächen 36 haben die gleiche Umfangsform.

In Figur 6 ist ein alternatives Ausführungsbeispiel eines wabenartigen Einlaufbelags 8 gezeigt. Auch hier gilt die Darstellung der Öffnungen 26a, b, c lediglich zum Aufzeigen eines beispielhaft möglichen, aber nicht beschränkenden Lochmusters.

In diesem Ausführungsbeispiel ist in den mittleren Hohlraum 20 eine Öffnung 26a vorgesehen, die sich über mehrere Waben 32 erstreckt und kreisförmig mit einem konstanten Durchmesser dö ausgeführt ist. Der vordere und hintere Hohlräume 22, 24 sind jeweils mit einer als Langloch ausgeführten Öffnung 26b, c versehen. Die langlochartigen Öffnungen 26b, c sind gleich ausgebildet mit einer Breite bö und einer Länge lö. Die langlochartigen Öffnungen 26b, c verlaufen im Wesentlichen in Umfangsrichtung U und erstrecken sich ebenfalls über mehrere Waben 32.

Das in Figur 5 skizzierte Verhältnis zwischen der Lochfläche und der Gesamtfläche gilt auch unter Figur 6.

Offenbart sind ein Dichtungsträger für eine Strömungsmaschine zum Abdichten eines Spaltes zwischen einem Statorabschnitt und einem Rotorabschnitt, mit einem Grundkörper, der an einer Seite mit einem Einlaufbelag versehen ist, wobei der Grundkörper zumindest einen Hohlraum hat, der über zumindest eine Öffnung zum Einlaufbelag geöffnet ist, so dass ein Helmholz-Resonator geschaffen ist, wobei der Bereich des Einlaufbelags, der mit der zumindest einen Öffnung versehen ist, die schwingende Masse des Helmholtz-Resonators schafft und der zumindest eine Hohlraum das Federvolumen des Helmholz-Resonators.

### Bezugszeichenliste

- 2: Dichtungsträger
- 4: Grundkörper
- 6: Seite
- 8: Einlaufbelag
- 10: Dichtungsträgeranordnung
- 12: Stator abschnitt
- 14: Radialspalt
- 16: Rotorabschnitt / Laufschaufel
- 18: Rotorwelle
- 19: Ringraum
- 20: mittlerer Hohlraum
- 22: vorderer Hohlraum
- 24: hinterer Hohlraum
- 26, a, b, c: Öffnungen
- 28: Trennwand
- 30: Trennwand
- 32: Zelle / Wabe
- 34: Wabenwand
- 36: Zellengrundfläche / Wabengrundfläche
- 38: Mündungsbereich
- 40: Zusatzraum

- A: Axialrichtung
- R: Radialrichtung
- U: Umfangsrichtung

- B: Breite des Dichtungsträgers, Erstreckung in Umfangsrichtung
- D: Dicke des Dichtungsträgers, Erstreckung in Radialrichtung
- D_{G}: Dicke Grundkörper
- D_{E}: Dicke Einlaufbelag
- L: Länge des Dichtungsträgers, Erstreckung in Axialrichtung
- b_{Ö}: Breite der Öffnungen
- d_{Ö}: Durchmesser der Öffnungen
- f_{Ö}: Öffnungsfläche der Öffnungen
- l_{HR}: Länge Hohlraum
- l_{HS}: Länge Zelle / Wabe
- l_{Ö}: Länge der Öffnungen

- V: Volumen
- V_{Z}: Zusatzvolumen

## Patentansprüche

1. Dichtungsträger (2) für eine Strömungsmaschine zum Abdichten eines Spaltes (14) zwischen einem Statorabschnitt (12) und einem Rotorabschnitt (16), mit einem Grundkörper (4), der an einer Seite (6) mit einem Einlaufbelag (8) versehen ist,
**dadurch gekennzeichnet,**
**dass** der Grundkörper (4) zumindest einen Hohlraum (20, 22, 24) aufweist, der über zumindest eine Öffnung (26, 26a, 26b, 26c) an der den Einlaufbelag (8) aufnehmenden Seite (6) geöffnet ist.

2. Dichtungsträger nach Patentanspruch 1, wobei eine Vielzahl von Hohlräumen (20, 22, 24) vorgesehen ist.

3. Dichtungsträger nach Patentanspruch 1 oder 2, wobei an der den Einlaufbelag (8) aufnehmenden Seite (6) eine Vielzahl von Öffnungen (26, 26a, 26b, 26c) ausgebildet sind.

4. Dichtungsträger nach Patentanspruch 3, wobei der Einlaufbelag (8) eine Zellenstruktur aufweist und zumindest einigen Zellen (32) einzelne Öffnungen (26, 26a, 26b, 26c) zugeordnet sind.

5. Dichtungsträger nach einem der vorhergehenden Patentansprüche, wobei der Einlaufbelag (8) eine Zellenstruktur aufweist und sich eine Öffnung (26a, 26b, 26c) über mehrere Zellen (32) erstreckt.

6. Dichtungsträger nach Patentanspruch 4 oder 5, wobei die den Einlaufbelag (8) aufnehmende Seite (6) als ein Gitter ausgeführt ist und sich der Einlaufbelag (8) entlang von Gitterstreben erstreckt.

7. Dichtungsträger nach einem der vorhergehenden Patentansprüche, wobei die den Einlaufbelag (8) aufnehmende Seite (6) eine Gesamtfläche hat, deren öffnungsfreien Flächenabschnitte in Summe größer sind als eine Lochfläche, die der Summe von Öffnungsflächen (fö) der Öffnungen (26, 26a, 26b, 26c) entspricht.

8. Dichtungsträger nach Patentanspruch 7, wobei die Lochfläche einen Anteil von ≤ 30% an der Gesamtfläche, noch bevorzugter einen Anteil von ≤ 20% an der Gesamtfläche, hat.

9. Dichtungsträger nach einem der vorhergehenden Patentansprüche, wobei in die zumindest eine Öffnung (26, 26a, 26b, 26c) und/oder in den zumindest einen Hohlraum (20, 22, 24) ein Dämpfungsmittel eingebracht ist.

10. Strömungsmaschine mit einer Dichtungsträgeranordnung (10) für eine Strömungsmaschine, zum Abdichten eines Spaltes (14) zwischen einem Statorabschnitt (12) und einem Rotorabschnitt (18), mit einer Vielzahl von Dichtungsträgern (2) nach einem der vorhergehenden Patentansprüche.
